# EUROPEAN PATENT APPLICATION

(11) **EP 4 163 445 A1**
(43) Date of publication of application: **12.04.2023**
(21) Application number: 21874882.0
(22) Date of filing: 29.07.2021
(51) Int. Cl.: E02F 9/22, E02F 9/24, E02F 9/26, B60T 7/12, G08G 1/16, F16F 9/28, F16F 9/50, F16F 15/02

(54) **WORK MACHINE**

(30) Priority: 29.09.2020 JP 2020163941
(71) Applicant: Komatsu Ltd., Minato-ku Tokyo 107-8414 (JP)
(72) Inventor: KITAO, Shinichi, Tokyo 107-8414 (JP); OKABE, Kazuyoshi, Tokyo 107-8414 (JP)
(74) Representative: Flügel Preissner Schober Seidel
(86) International application number: PCT/JP2021/028122
(87) International publication number: WO 2022/070579

(57) **Abstract**

This wheel loader (10) has a vehicle body (20), lift cylinders (16), a hydraulic circuit (61), an accumulator (63), and a controller (27). The vehicle body (20) has a work implement (3). The lift cylinders (16) drive the work implement (3). The hydraulic circuit (61) is connected to the lift cylinders (16). The accumulator (63) is connected to the hydraulic circuit (61) through an on/off valve (62). The controller (27) switches the on/off valve (62) to the open position when pitching is predicted to occur on the vehicle body (20).

## Description

### Technical Field

The present invention relates to a work machine.

### Background Art

Patent Document No. 1 proposes a method for switching between interconnection and disconnection of a lift cylinder and an accumulator of a work implement in response to the vehicle speed in a wheel loader that is an example of a work machine.

Specifically, when the vehicle speed meets or exceeds a first threshold, the lift cylinder and the accumulator are interconnected whereby a force transmitted from the vehicle body to the work implement can be absorbed by the accumulator. Conversely, when the vehicle speed is equal to or less than a second threshold, the lift cylinder and the accumulator are disconnected whereby a reduction in the loading performance of the work implement can be suppressed.

### Prior Art Document

### Reference

Patent Document No. 1: Japanese Patent Laid-open No. H5-209422

### Summary of the Invention

### Problem to be Resolved by the invention

However, in an actual work site, pitching often occurs on the vehicle body regardless of the vehicle speed. In this case, if the force transmitted from the work implement to the vehicle body cannot be absorbed by the accumulator, there is a concern that large pitching may occur on the vehicle body and the load may fall from the work implement.

An object of the present disclosure is to provide a work machine that is able to suppress pitching of the vehicle body regardless of the vehicle speed.

### Means for Resolving the Problem

A work machine according to the present disclosure comprises a vehicle body, a hydraulic cylinder, a hydraulic circuit, an accumulator, and a controller. The vehicle body has a main body that includes an undercarriage, and a work implement attached to the main body. The hydraulic cylinder is configured to drive the work implement. The hydraulic circuit is connected to the hydraulic cylinder. The accumulator is connected to the hydraulic circuit through an on/off valve. The controller is configured to switch the on/off valve to an open position when pitching is predicted to occur on the vehicle body.

### Effect of the Invention

According to the present disclosure, there can be provided a work machine that is able to suppress pitching of the vehicle body regardless of the vehicle speed.

### Brief Description of Drawings

FIG. 1 is a side view of a wheel loader.
FIG. 2 is a block diagram illustrating a system configuration of the wheel loader.
FIG. 3 is a block diagram illustrating a configuration of a controller.
FIG. 4 is a flow chart for explaining a travel damper control performed by the controller.

### Description of Embodiments

### (Outline of wheel loader)

The following is an explanation of a wheel loader as an example of a work machine with reference to the drawings. In the following explanations, "front," "rear," "left," "right," "up," and "down" indicate directions relative to a state of looking forward from the driver's seat. "Vehicle width direction" and "left-right direction" have the same meaning.

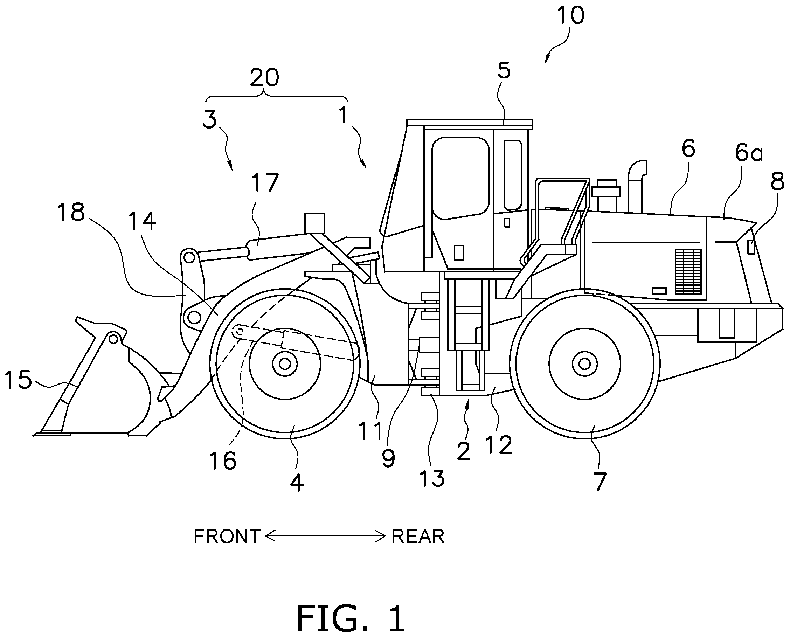

FIG. 1 is a side view of an overall configuration of a wheel loader 10 according to the present embodiment.

The wheel loader 10 comprises a main body 1 and a work implement 3. The main body 1 and the work implement 3 constitute a vehicle body 20 of the wheel loader 10.

The main body 1 has a vehicle body frame 2, a pair of front tires 4, a cab 5, an engine room 6, a pair of rear tires 7, and a brake lamp 8. The vehicle body frame 2, the pair of front tires 4, and the pair of rear tires 7 constitute the undercarriage of the wheel loader 10.

The vehicle body frame 2 is a so-called articulate frame. The vehicle body frame 2 includes a front frame 11, a rear frame 12, and a coupling axis part 13. The front frame 11 is arranged in front of the rear frame 12. The coupling axis part 13 is provided in the middle in the vehicle width direction. The coupling shaft part 13 couples the front frame 11 and the rear frame 12 to each other in a manner that allows swinging. The angle of the front frame 11 with respect to the rear frame 12 is adjusted by extending or contracting an articulate cylinder 9.

The pair of front tires 4 are attached on the left and right of the front frame 11. The pair of rear tires 7 are attached to the left and right of the rear frame 12.

The work implement 3 is attached to the main body 1. The work implement 3 is used in various types of work (for example, loading or unloading earth and sand). The work implement 3 is driven by hydraulic fluid from a belowmentioned hydraulic pump 64. The work implement 3 includes a boom 14, a bucket 15, a pair of lift cylinders 16, and a bucket cylinder 17. The boom 14 is attached to the front frame 11. The bucket 15 is attached to the tip of the boom 14.

The lift cylinders 16 and the bucket cylinder 17 are hydraulic cylinders for driving the work implement 3. The lift cylinders 16 are coupled to the front frame 11 and the boom 14. The boom 14 is driven up and down due to the extension and contraction of the lift cylinders 16. The lift cylinders 16 are an example of a "hydraulic cylinder" in the present disclosure. The bucket cylinder 17 is coupled to the front frame 11 and a bell crank 18. The bucket 15 is driven up and down due to the extension and contraction of the bucket cylinder 17.

The cab 5 is mounted on the rear frame 12. The cab 5 has disposed therein a steering handle for changing the traveling direction of the wheel loader 10, a lever for operating the work implement 3, various pedals, various switches, and a display device, etc.

The engine room 6 is disposed on the rear frame 12 to the rear of the cab 5. A belowmentioned engine 31 is provided in the engine room 6. A counterweight 6a is disposed to the rear of the engine room 6. The counterweight 6a is disposed at the rear upper end of the rear frame 12.

The brake lamp 8 is disposed at a rear end part of the vehicle body 20. The brake lamp 8 is lit when a belowmentioned brake pedal 54 is operated or when a belowmentioned automatic brake control is executed.

### (System configuration of wheel loader)

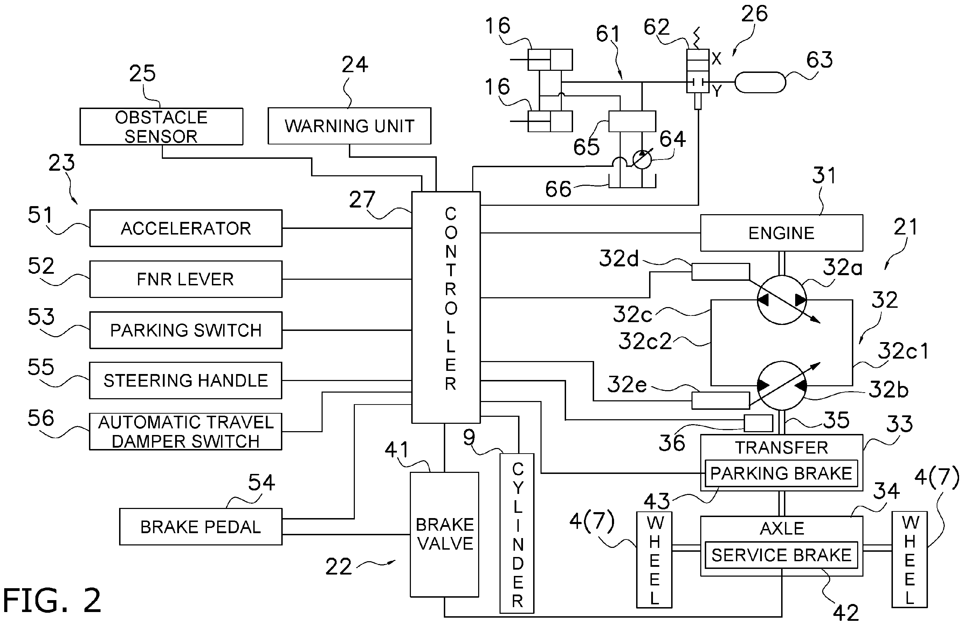

FIG. 2 is a block diagram schematically illustrating a system configuration of the wheel loader 1.

The wheel loader 10 comprises a travel unit 21, a braking unit 22, an operating unit 23, a warning unit 24, an obstacle sensor 25, a travel damper unit 26, and a controller 27.

### 1. Travel unit 21

The travel unit 21 has the engine 31, a hydro static transmission (HST) 32, a transfer 33, axles 34, the front tires 4, and the rear tires 7.

The engine 31 is, for example, a diesel engine. The HST 32 includes a pump 32a, a motor 32b, and a hydraulic circuit 32c.

The pump 32a is a skew plate-type variable capacitor pump. The angle of the skew plate of the pump 32a can be changed with a solenoid 32d. The pump 32a is driven by the engine 31 to discharge hydraulic fluid. The hydraulic fluid discharged from the pump 32a is fed to the motor 32b through the hydraulic circuit 32c. The motor 32b is a skew plate-type pump. The angle of the skew plate of the motor 32b can be changed with a solenoid 32e.

The hydraulic circuit 32c is connected to the pump 32a and the motor 32b. The hydraulic circuit 32c includes a first drive circuit 32c1 and a second drive circuit 32c2. The hydraulic fluid is supplied to the motor 32b from the pump 32a through the first drive circuit 32c1 whereby the motor 32b is driven in one direction (for example, the forward travel direction). The hydraulic fluid is supplied to the motor 32b from the pump 32a through the second drive circuit 32c2 whereby the motor 32b is driven in the other direction (for example, the reverse travel direction). The discharge direction of the hydraulic fluid to the first drive circuit 32c1 or to the second drive circuit 32c2 may be changed by means of the solenoid 32d.

The motor 32b is coupled to the transfer 33 via a drive shaft 35. A vehicle speed sensor 36 is provided to the drive shaft 35. The vehicle speed sensor 36 detects the speed (referred to below as vehicle speed) of the vehicle body 20. The vehicle speed sensor 36 detects the vehicle speed on the basis of the rotation speed of the drive shaft 35. The vehicle speed sensor 36 transmits a detection signal indicating the vehicle speed to the controller 27.

The transfer 33 distributes the output of the engine 31 to the front side axle 34 and the rear side axle 34. The pair of front tires 4 are connected to the front side axle 34. The pair of front tires 4 rotate due to the output distributed to the front side axle 34. The pair of rear tires 7 are connected to the rear side axle 34. The pair of rear tires 7 rotate due to the output distributed to the rear side axle 34.

### 2. Braking unit 22

The braking unit 22 has a brake valve 41, service brakes 42, and a parking brake 43.

The brake valve 41 is, for example, an electric proportional valve (EPC). The amount of hydraulic fluid fed to the service brakes 42 is adjusted in response to the opening degree of the brake valve 41. The opening degree of the brake valve 41 is controlled by the controller 27. The controller 27 controls the opening degree of the brake valve 41 in response to an operating amount of the belowmentioned brake pedal 54 or for a belowmentioned automatic brake control.

The service brakes 42 are provided to the front side axle 34 and the rear side axle 34. The service brakes 42 are hydraulic brakes. The braking force of the service brakes 42 increases as the opening degree of the brake valve 41 becomes larger.

The parking brake 43 is provided to the transfer 33. For example, a multistage wet brake or a disc brake or the like that can be switched between a braking state and a non-braking state may be used as the parking brake 43.

### 3. Operating unit 23

The operating unit 23 has an accelerator 51, an FNR lever 52, a parking switch 53, the brake pedal 54, a steering handle 55, and an automatic travel damper switch 56.

The accelerator 51 is provided inside the cab 5. The accelerator 51 transmits an operation signal indicating an accelerator operating amount to the controller 27. The controller 27 controls the throttle opening degree of the engine 31 on the basis of the received operation signal.

When the accelerator 51 is in an OFF state during travel, a braking force is produced due to internal inertia because the supply of fuel to the engine 31 is stopped and the respective skew plates of the pump 32a and the motor 32b provide travel resistance. As a result, the wheel loader 10 decelerates.

The FNR lever 52 is provided inside the cab 5. The FNR lever 52 can be switched between a forward travel position, a neutral position, and a reverse travel position. The FNR lever 52 transmits an operation signal indicating the position of the FNR lever 52 to the controller 27. The controller 27 controls the solenoid 32d on the basis of the received operation signal thereby switching between forward travel, neutral, and reverse travel. In addition, when the FNR lever 52 is switched to the neutral position, the controller 27 controls the solenoids 32d and 32e thereby controlling the respective skew plates of the pump 32a and the motor 32b so that travel resistance is produced. As a result, a braking force is produced due to the internal inertia and the wheel loader 10 decelerates.

The parking switch 53 is provided inside the cab 5. The parking switch 53 can be switched between an ON position and an OFF position. The parking switch 53 transmits an operation signal indicating the position of the parking switch 53 to the controller 37. The controller 27 sets the parking brake 43 in a braking state or a non-braking state on the basis of the received operation signal.

The brake pedal 54 is provided inside the cab 5. The brake pedal 54 transmits operation signals indicating a pedal operating amount and a pedal operating speed to the controller 27. The controller 27 controls the opening degree of the brake valve 41 on the basis of the received operation signals.

The steering handle 55 is provided inside the cab 5. The steering handle 55 transmits operation signals indicating the steering handle operating direction and the steering handle operating amount to the controller 27. The controller 27 extends or contracts the articulate cylinder 9 disposed on the vehicle body frame 2 on the basis of the received operation signals.

The automatic travel damper switch 56 is provided inside the cab 5. The automatic travel damper switch 56 can be switched between an ON position and an OFF position. The automatic travel damper switch 56 transmits an operation signal indicating the position of the automatic travel damper switch 56 to the controller 27. The controller 27 sets the automatic travel damper control to an active state or an inactive state on the basis of the received operation signal.

### 4. Warning unit 24

The warning unit 24 issues a warning (for example, the lighting of a warning light, the emission of a warning sound, or the display of a warning, etc.) to the operator as one form of collision suppression control when a belowmentioned warning instruction signal is received from the controller 27.

### 5. Obstacle sensor 25

The obstacle sensor 25 detects an obstacle in proximity to the vehicle body 20. In particular, the obstacle sensor 25 preferably detects an obstacle located in front of or to the rear of the vehicle body 20.

The obstacle sensor 25 measures the distance to the obstacle. A millimeter wave radar or a camera may be used as the obstacle sensor 25. The obstacle sensor 25 transmits obstacle information that indicates that an obstacle has been detected and the distance to the obstacle, to the controller 27.

### 6. Travel damper unit 26

The travel damper unit 26 has a hydraulic circuit 61, an on/off valve 62, an accumulator 63, a hydraulic pump 64, a boom cylinder control valve 65, and a hydraulic fluid tank 66.

The hydraulic circuit 61 is connected to the pair of lift cylinders 16, the on/off valve 62, and the boom cylinder control valve 65.

The on/off valve 62 is disposed between the lift cylinders 16 and the accumulator 63. The on/off valve 62 is a two-position switching valve that can be switched to an open position X and a closed position Y. The position of the on/off valve 62 is controlled by the controller 27.

When the on/off valve 62 is positioned in the open position X, the on/off valve 62 interconnects the lift cylinders 16 and the accumulator 63. As a result, the lift cylinders 16 and the accumulator 63 are connected and a travel damper function of the wheel loader 1 enters an ON state. When the on/off valve 62 is positioned in the closed position Y, the on/off valve 62 disconnects the lift cylinders 16 and the accumulator 63. As a result, the connection of the lift cylinders 16 and the accumulator 63 is disconnected and the travel damper function of the wheel loader 1 enters an OFF state.

The accumulator 63 is connected to the hydraulic circuit through the on/off valve 62. The accumulator 63 is connected to the lift cylinders 16 through the hydraulic circuit 61 when the on/off valve 62 is positioned in the open position X. In this case, the accumulator 63 functions as a damper mechanism for reducing vibration of the lift cylinders 16.

The accumulator 63 is disconnected from the lift cylinders 16 by the on/off valve 62 when the on/off valve 62 is positioned in the closed position Y. In this case, the accumulator 63 does not function as a damper mechanism for reducing vibration of the lift cylinders 16.

The hydraulic pump 64 is driven by the engine 31. The hydraulic pump 64 supplies hydraulic fluid stored in the hydraulic fluid tank 66 to the lift cylinders 16 through the boom cylinder control valve 65 and the hydraulic circuit 61.

### 7. controller 27

The controller 27 includes a processor such as a central processing unit (CPU), a main memory that includes a non-volatile memory such as a read only memory (ROM) and a volatile memory such as a random access memory (RAM), and a storage. The controller 27 reads a program stored in the storage, expands the program in the main memory, and executes a predetermined process according to the program.

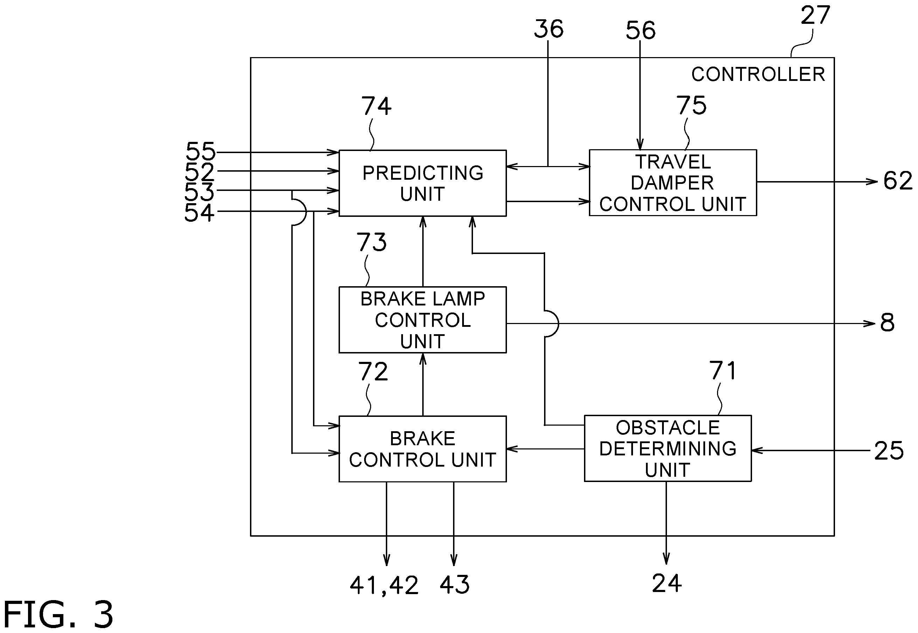

FIG. 3 is a block diagram of a configuration of the controller 27. However, the basic system configuration pertaining to the travel unit 21 is omitted from FIG. 3.

The controller 27 has an obstacle determining unit 71, a brake control unit 72, a brake lamp control unit 73, a predicting unit 74, and a travel damper control unit 75.

### (1) Obstacle determining unit 71

The obstacle determining unit 71 determines that the obstacle sensor 25 has detected an obstacle when obstacle information is received from the obstacle sensor 25. The obstacle determining unit 71 transmits an obstacle detection signal that indicates that an obstacle has been detected, to the predicting unit 74.

The obstacle determining unit 71 refers to the distance to the obstacle included in the obstacle information and determines whether the distance between the obstacle and the vehicle body 20 is equal to or less than a predetermined distance.

When the distance between the obstacle and the vehicle body 20 is equal to or less than the predetermined distance, the obstacle determining unit 71 assesses that there is a need to execute a collision suppression control, transmits an automatic brake indication signal to the brake control unit 72, and transmits a warning instruction signal to the warning unit 24. When the distance between the obstacle and the vehicle body 20 is not equal to or less than the predetermined distance, the obstacle determining unit 71 assesses that there is no need to execute a collision suppression control and does not transmit the signals to the brake control unit 72 and the warning unit 24.

### (2) Brake control unit 72

The brake control unit 72 executes, as one form of the collision suppression control, the automatic brake control for causing the vehicle body 20 to decelerate when the automatic brake indication signal is received from the obstacle determining unit 71 during travel of the wheel loader 10. Specifically, the brake control unit 72 causes the service brakes 42 to generate a braking force by increasing the opening degree of the brake valve 41. Alternatively, the brake control unit 72 may cause the braking force to be generated by activating the parking brake 43. The brake control unit 72 is able to generate the braking force by means of at least one of the service brakes 42 and the parking brake 43 until the vehicle body 20 stops.

The brake control unit 72 executes a brake control in accordance with the operation of the brake pedal 54 by the operator while no automatic brake indication signal is received from the obstacle determining unit 71. In this case, the brake control unit 72 controls the opening degree of the brake valve 41 in accordance with the operating amount of the brake pedal 54 by the operator.

The brake control unit 72 transmits a braking signal to the brake lamp control unit 73 when the automatic brake control or the brake control is executed.

### (3) Brake lamp control unit 73

The brake lamp control unit 73 transmits, to the predicting unit 74, a lighting indication signal for causing the brake lamp 8 to be lit, and causes the brake lamp 8 to be lit when the braking signal is received from the brake control unit 72.

### (4) Predicting unit 74

The predicting unit 74 predicts that pitching will occur on the vehicle body 20. Specifically, the predicting unit 74 predicts that pitching will occur on the vehicle body 20 when an obstacle is detected by the obstacle sensor 25, when the vehicle body 20 is decelerating, and when the travel direction of the vehicle body 20 is changed during travel of the wheel loader 10. The fact that the wheel loader 10 is traveling is determined on the basis of a detection signal received from the vehicle speed sensor 36.

The predicting unit 74 is able to assess that the obstacle sensor 25 has detected an obstacle when the obstacle detection signal is received from the obstacle determining unit 71.

The predicting unit 74 is able to assess that the vehicle body 20 is decelerating when the fact that the brake pedal 54 has been operated is detected on the basis of the operation signal from the brake pedal 54. Alternatively, the predicting unit 74 may assess that the vehicle body 20 is decelerating when the pedal operating amount is equal to or greater than a predetermined amount and/or the pedal pedal operating speed is equal to or greater than a predetermined value.

The predicting unit 74 is able to assess that the vehicle body 20 is decelerating when it is detected that the parking switch 53 is positioned in the ON position on the basis of an operation signal from the parking switch 53.

The predicting unit 74 is able to assess that the vehicle body 20 is decelerating when it is detected that the FNR lever 52 has been switched from the forward travel position to the neutral position or the reverse travel position, or when the FNR lever 52 has been switched from the reverse travel position to the neutral position or the forward travel position, on the basis of the operation signal from the FNR lever 52.

The predicting unit 74 is able to assess that the vehicle body 20 is decelerating when it is detected that the brake lamp 8 has been lit on the basis of a lighting instruction signal from the brake lamp control unit 73.

The predicting unit 74 is able to assess that the traveling direction of the vehicle body 20 has changed when it is detected that the steering handle 55 has been operated on the basis of the operation signal from the steering handle 55. Alternatively, the predicting unit 74 is also able to assess that the traveling direction of the vehicle body 20 has changed when the steering handle operating amount is equal to or greater than a predetermined amount and/or when the steering handle operating speed is equal to or greater than a predetermined value.

When the predicting unit 74 predicts that pitching will occur on the vehicle body 20, the predicting unit 74 transmits pitching prediction information indicating the fact to the travel damper control unit 75.

### (5) Travel damper control unit 75

The travel damper control unit 75 turns the travel damper function of the wheel loader 1 on by switching the on/off valve 62 to the open position X when the pitching prediction information is received from the predicting unit 74.

The travel damper control unit 75 refers to the operation signal from the automatic travel damper switch 56 and determines whether to switch the automatic travel damper switch 56 to the ON position or the OFF position.

The travel damper control unit 75 determines whether the vehicle speed is equal to or less than a predetermined speed on the basis of a detection signal received from the vehicle speed sensor 36. The predetermined speed is set to a sufficiently slow speed (for example, 5 km/h) during which work using the work implement 3 can be performed.

The travel damper control unit 75 switches the travel damper function of the wheel loader 1 to the OFF position by switching the on/off valve 62 to the closed position Y when no pitching prediction information is received from the predicting unit 74 and when the automatic travel damper switch 56 is positioned in the OFF position.

The travel damper control unit 75 switches the travel damper function of the wheel loader 1 to the OFF position by switching the on/off valve 62 to the closed position Y when no pitching prediction information is received from the predicting unit 74 and when the vehicle speed is equal to or less than the predetermined speed even when the automatic travel damper switch 56 is positioned in the ON position.

The travel damper control unit 75 switches the travel damper function of the wheel loader 1 to the ON position by switching the on/off valve 62 to the open position X when no pitching prediction information is received from the predicting unit 74 and when the vehicle speed is not equal to or less than the predetermined speed when the automatic travel damper switch 56 is positioned in the ON position.

### (Travel damper control by the controller)

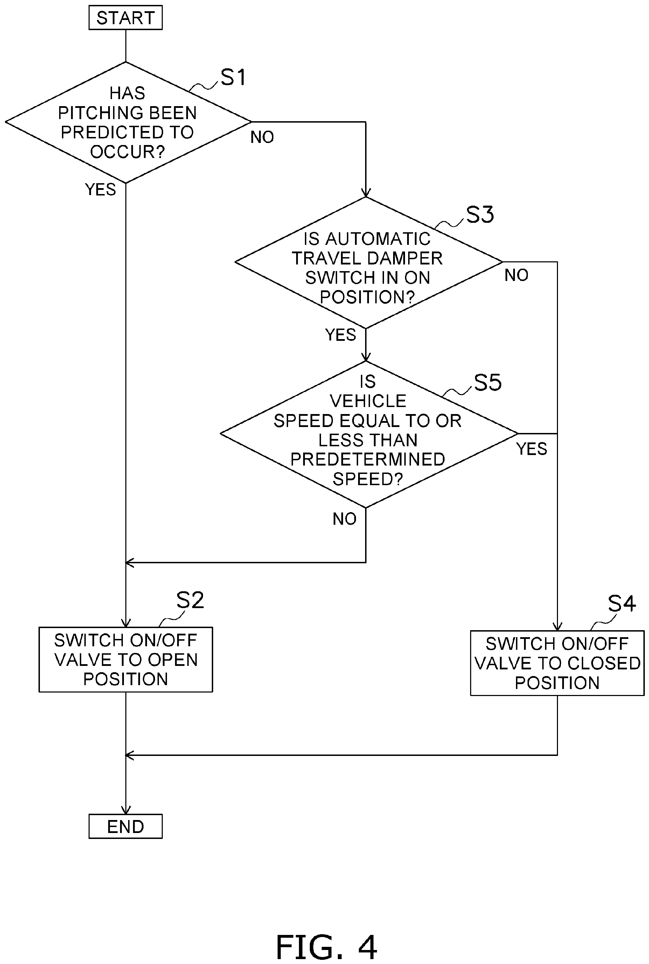

FIG. 4 is a flow chart for explaining the travel damper control performed by the controller 27. In FIG. 4, it is understood that the wheel loader 10 is traveling forward or in reverse.

In step S1, the predicting unit 74 determines whether the occurrence of pitching on the vehicle body 20 has been predicted. The predicting unit 74 predicts that pitching will occur on the vehicle body 20 when an obstacle is detected by the obstacle sensor 25, when the vehicle body 20 is decelerating, and when the travel direction of the vehicle body 20 is changed as explained above.

When the occurrence of pitching on the vehicle body 20 is predicted in step S1, the process advances to step S2 and the travel damper control unit 75 switches the on/off valve 62 to the open position X. As a result, the travel damper function of the wheel loader 1 enters the ON state.

When the occurrence of pitching on the vehicle body 20 is not predicted in step S1, the process advances to step S3 and the travel damper control unit 75 determines whether the automatic travel damper switch 56 is positioned in the ON position.

When the automatic travel damper switch 56 is not positioned in the ON position in step S3, the process advances to step S4 and the travel damper control unit 75 switches the on/off valve 62 to the closed position Y. As a result, the travel damper function of the wheel loader 1 enters the OFF state.

When the automatic travel damper switch 56 is positioned in the ON position in step S3, the process advances to step S5 and the travel damper control unit 75 determines whether the vehicle speed is equal to or less than the predetermined speed.

When the vehicle speed is equal to or less than the predetermined speed in step S5, the process advances to step S2 and the travel damper control unit 75 switches the on/off valve 62 to the open position X.

When the vehicle speed is equal to or less than the predetermined speed in step S3, the process advances to step S4 and the travel damper control unit 75 switches the on/off valve 62 to the closed position Y.

### (Characteristics)

(1) When pitching is predicted to occur on the vehicle body 20 in the wheel loader 10 (example of a work vehicle) according to the present embodiment, the controller 27 sets the on/off valve 62 disposed in the hydraulic circuit 61 that connects the accumulator 63 and the pair of lift cylinders 16 to an open state.
   Consequently, the travel damper function of the wheel loader 1 can be previously set to the ON state when pitching is predicted to occur on the vehicle body 20 regardless of the vehicle speed of the wheel loader 10. As a result, the load on the operator can be lightened and falling of loads from the work implement 3 can be suppressed because pitching occurring on the vehicle body 20 can be suppressed.
(2) The controller 27 predicts that pitching will occur when an obstacle is detected by the obstacle sensor 25, when the vehicle body 20 is decelerating, and when the travel direction of the vehicle body 20 is changed. In particular, while a sudden stop of the vehicle body 20 is predicted due to the automatic brake control or an operation by the operator in accordance with a warning when the obstacle sensor 25 has detected an obstacle, even in such a situation, the occurrence of pitching on the vehicle body 20 can be suppressed.
(3) Even when pitching is not predicted to occur on the vehicle body 20 and the automatic travel damper switch 56 is positioned in the ON position, the controller 27 sets the on/off valve 62 to the closed state when the vehicle speed is equal to or less than the predetermined speed.

Consequently, when the vehicle body 20 must move at a slow speed accompanying work using the work implement 3, a reduction of the loading capacity of the work implement 3 can be suppressed due to the travel damper function being set to the OFF state.

### (Modified examples of the embodiment)

Although an embodiment of the present invention has been described so far, the present invention is not limited to the above embodiment and various modifications may be made within the scope of the invention.

### (Modified example 1)

While the predicting unit 74 predicts that pitching will occur on the basis of the detection of an obstacle, the deceleration of the vehicle body 20, and a change in the travel direction in the above embodiment, the occurrence of pitching may be predicted on the basis of one or two of the above reasons.

For example, the predicting unit 74 may predict that pitching will occur on the basis of only the detection of an obstacle. Even in this situation, the occurrence of intense pitching accompanying a sudden stop can be effectively suppressed.

When pitching is predicted to occur only on the basis of the detection of an obstacle, the controller 27 does not need to be provided with the predicting unit 74, and an instruction for turning on the travel damper may be transmitted from the obstacle determining unit 71 to the travel damper control unit 75.

### (Modified example 2)

While the predicting unit 74 predicts that pitching will occur when an obstacle is detected by the obstacle sensor 25 in the above embodiment, the present invention is not limited in this way. The predicting unit 74 may predict that pitching will occur based on the fact that the obstacle determining unit 71 transmitted the automatic brake indication signal to the brake control unit 72 or the fact that the brake control unit 72 transmitted the control signal to the brake valve 41 after the obstacle has been detected by the obstacle sensor 25.

### (Modified example 3)

While the controller 27 executes the automatic brake control for reducing the speed of the vehicle body 20 as one form of collision suppression control in the above embodiment, the present invention is not limited in this way. For example, the controller 27 may execute an engine output reduction control for reducing the speed of the vehicle body 20. Reducing the throttle opening degree or stopping the fuel supply may be considered as examples of the engine output reduction control.

### (Modified example 4)

While the wheel loader 10 is provided with the pair of lift cylinders 16 in the above embodiment, the present invention is not limited in this way. The wheel loader 10 may be provided with one or more lift cylinders 16.

### (Modified example 5)

While the wheel loader 10 was described an an example of the work machine in the above embodiment, a hydraulic excavator provided with wheels or a backhoe loader may also be considered as examples of the work machine in addition to the wheel loader.

### (Modified example 6)

While the wheel loader 10 is provided with the the HST 32 as the transmission in the above embodiment, the present invention is not limited in this way. For example, a hydro mechanical transmission (HMT) or a torque converter (T/C), etc., may be used as the transmission.

### (Modified example 7)

While the opening degree of the brake valve 41 is controlled by the controller 27 in response to the operating amount of the brake pedal 54 in the above embodiment, the present invention is not limited in this way. The opening degree of the brake valve 41 may be controlled by PPC pressure that is generated in response to the operating amount of the brake pedal 54. In this case, the opening degree of the brake valve 41 is controlled in accordance with the larger PPC pressure among the PPC pressure corresponding to the operating amount of the brake pedal 54 and the PPC pressure generated on the basis of an instruction from the controller 27.

### (Modified example 8)

While the predicting unit 74 of the controller 27 detects that the brake pedal 54 has been operated on the basis of an operation signal from the brake pedal 54 in the above embodiment, the present invention is not limited in this way. For example, when the opening degree of the brake valve 41 is controlled according to the PPC pressure corresponding to the operating amount of the brake pedal 54, the controller 27 is able to detect that the brake pedal 54 was operated when the PPC pressure is generated in accordance with the operating amount of the brake pedal 54.

### (Modified example 9)

While the wheel loader 10 is provided with the brake pedal 54 in the above embodiment, the brake pedal 54 may not be provided when an automatic driving system, etc., is used. In this case, the predicting unit 74 of the controller 27 is able to assess that the speed of the vehicle body 20 has been reduced when an obstacle detection signal is received from the obstacle determining unit 71 or when a brake instruction is received from outside.

### (Modified example 10)

While the predicting unit 74 assesses that the travel direction of the vehicle body 20 has changed when the steering handle 55 is operated in the above embodiment, the present invention is limited in this way. For example, the predicting unit 74 may assess that the travel direction of the vehicle body 20 has changed when an operation signal is transmitted to a direction indicator for showing a left or right turn or a lane change.

### List of Reference Numerals

- 1:: Main body
- 3:: Work implement
- 10:: Wheel loader
- 16:: Lift cylinder
- 20:: Vehicle body
- 25:: Obstacle sensor
- 27:: Controller
- 56:: Automatic travel damper switch
- 61:: Hydraulic circuit
- 62:: On/off valve
- 63:: Accumulator

## Claims

1. A work machine comprising:
a vehicle body having a main body that includes an undercarriage, and a work implement attached to the main body;
a hydraulic cylinder configured to drive the work implement;
a hydraulic circuit connected to the hydraulic cylinder;
an accumulator connected to the hydraulic circuit through an on/off valve;
an obstacle sensor configured to detect an obstacle in the periphery of the vehicle body during travel; and
a controller configured to switch the on/off valve to an open position and execute a collision suppression control for suppressing a collision between the vehicle body and the obstacle when the obstacle sensor has detected the obstacle.

2. The work machine according to claim 1, wherein:
the collision suppression control includes at least one control among a control for reducing the speed of the vehicle body and a control for emitting a warning.

3. The work machine according to claim 1 or 2, further comprising
an automatic travel damper switch, wherein
the controller is configured to switch the on/off valve to a closed position when pitching on the vehicle body is not predicted to occur, the automatic travel damper switch is positioned in a ON position and the speed of the vehicle body is equal to or less than a predetermined speed.

4. A work machine comprising:
a vehicle body having a main body that includes an undercarriage, and a work implement attached to the main body;
a hydraulic cylinder configured to drive the work implement;
a hydraulic circuit connected to the hydraulic cylinder;
an accumulator connected to the hydraulic circuit through an on/off valve; and
a controller configured to switch the on/off valve to an open position when pitching is predicted to occur on the vehicle body.

5. The work machine according to claim 4, further comprising:
an obstacle sensor configured to detect an obstacle in the periphery of the vehicle body during travel, wherein
the controller is configured to predict that pitching will occur on the vehicle body and execute a collision suppression control for suppressing a collision between the vehicle body and the obstacle when the obstacle sensor has detected the obstacle.

6. The work machine according to claim 5, wherein
the collision suppression control includes at least one control among a control for reducing the speed of the vehicle body and a control for emitting a warning.

7. The work machine according to any one of claims 4 to 6, wherein
the controller is configured to predict that pitching will occur on the vehicle body when the speed of the vehicle body is reduced.

8. The work machine according to any one of claims 4 to 7, wherein
the controller is configured to predict that pitching will occur on the vehicle body when the travel direction of the vehicle body is changed.

9. The work machine according to any one of claims 4 to 8, further comprising
an automatic travel damper switch, wherein
the controller is configured to switch the on/off valve to a closed position when pitching on the vehicle body is not predicted to occur, the automatic travel damper switch is positioned in a ON position and the speed of the vehicle body is equal to or less than a predetermined speed.
